# EUROPEAN PATENT APPLICATION

(11) **EP 4 723 501 A1**
(43) Date of publication of application: **08.04.2026**
(21) Application number: 25198938.0
(22) Date of filing: 29.08.2025
(51) Int. Cl.: H04B 7/0404, H04B 7/0456, H04B 7/06, H04B 7/10

(54) **MIMO CONFIGURATION FOR UES WITH HYBRID UNIFORM AND NON-UNIFORM ANTENNA PORTS**

(30) Priority: 27.09.2024 FI 20246165
(71) Applicant: Nokia Technologies Oy, 02610 Espoo (FI)
(72) Inventor: SVENDSEN, Simon, Aalborg (DK); ROM, Christian, Aalborg (DK); HARREBEK, Johannes, Aalborg (DK); VEJLGAARD, Benny, Gistrup (DK)
(74) Representative: Nokia EPO representatives

(57) **Abstract**

For a UE supporting a H-AP configuration including uniform APs and non-uniform APs, determining a configuration for two patch feed connections on dual polarized panel elements of an antenna array to be used for transmission on the uniform AP. The UE receives, from an access node, information indicative of a first uplink RS configuration associated with the non-uniform APs and a second uplink RS configuration associated with the uniform APs. The UE transmits, to the access node, at least one of a first set of uplink RSs based on the first uplink RS configuration associated with the non-uniform APs or a second set of uplink RSs based on the second uplink RS configuration associated with the uniform APs and based on the configuration for the two patch feed connections.

## Description

### TECHNICAL FIELD

Examples of embodiments herein relate generally to wireless communications and, more specifically, relate to MIMO (multiple input, multiple output) configurations and corresponding antennas.

### BACKGROUND

In a wireless system such as a cellular network, user equipment (UEs) are wireless, typically mobile devices that connect to the cellular system through an access node. The access node in some examples can be a gNB (gNode B, a base station for the cellular network). UEs use antenna arrays to communicate with the gNB.

In a traditional single-polarized antenna array, there is only one polarization axis. This is basically a single output for transmission or a single input for reception. In contrast, dual-polarized antenna arrays have two orthogonal polarization axes (e.g., horizontal and vertical). This allows the dual-polarized antenna array to receive signals with both polarizations simultaneously. Dual-polarized antenna arrays allow the UE to perform MIMO (multiple input, multiple output) communications, as both the UE and the gNB can support the multiple polarizations.

A UE interacts with its antenna array using RF receive chains, also referred to as antenna ports (APs). In further detail, an antenna port is a term used in 3GPP (third generation partnership project) to describe a receiver chain (DL AP, downlink antenna port) or a transmitter chain (UL AP, uplink antenna port). As such, up to the number of supported MIMO layers in DL and UL. These are also sometimes referred to as logical APs.

Meanwhile, an antenna connection such as a patch feed connection is a physical connection to an antenna element, where an antenna can have one (monopoles and dipoles) or more (e.g., two for a square patch element) uncorrelated antenna connections. These are sometimes referred to as physical APs within 3GPP. The number of physical APs can be higher than the number of logical APs. This is typically the case for UL, as UEs typically support more MIMO layers for DL as compared to UL. As such, more antenna supporting the frequency range for transmission than the available RF transmitter chains (logical AP.)

For MIMO, there are some typical implementations. For instance, there is single layer MIMO, which can be achieved by a single transceiver, when the output of the receiver is distributed to the APC or both polarizations. Another example is 2x2 MIMO, which requires two uncorrelated antennas, which can be individual antenna or a dual polarized antenna array. There is dual layer MIMO, which can be achieved by two transceivers, when the outputs of the receivers are distributed to each of the two polarizations at the antenna array. A final example is 4x4 MIMO, which will require two dual polarized antenna arrays for this configuration.

While antenna arrays such as dual-polarized antenna arrays are useful, MIMO configurations using such antenna arrays can be improved.

### BRIEF SUMMARY

This section is intended to include examples and is not intended to be limiting.

In an exemplary embodiment, a method is disclosed that includes, for a user equipment supporting a hybrid antenna port configuration comprising uniform antenna ports and non-uniform antenna ports, determining a configuration for two patch feed connections on dual polarized panel elements of an antenna array to be used for transmission on the uniform antenna ports; receiving, by the user equipment from an access node, information indicative of a first uplink reference signal configuration associated with the non-uniform antenna ports and a second uplink reference signal configuration associated with the uniform antenna ports; and transmitting, to the access node by the user equipment, at least one of a first set of uplink reference signals based on the first uplink reference signal configuration associated with the non-uniform antenna ports or a second set of uplink reference signals based on the second uplink reference signal configuration associated with the uniform antenna ports and based on the configuration for the two patch feed connections.

An additional exemplary embodiment includes a computer program, comprising instructions for performing the method of the previous paragraph, when the computer program is run on an apparatus. The computer program according to this paragraph, wherein the computer program is a computer program product comprising a computer-readable medium bearing the instructions embodied therein for use with the apparatus. Another example is the computer program according to this paragraph, wherein the program is directly loadable into an internal memory of the apparatus.

An exemplary apparatus includes one or more processors and one or more memories storing instructions that, when executed by the one or more processors, cause the apparatus at least to perform: for a user equipment supporting a hybrid antenna port configuration comprising uniform antenna ports and non-uniform antenna ports, determining a configuration for two patch feed connections on dual polarized panel elements of an antenna array to be used for transmission on the uniform antenna ports; receiving, by the user equipment from an access node, information indicative of a first uplink reference signal configuration associated with the non-uniform antenna ports and a second uplink reference signal configuration associated with the uniform antenna ports; and transmitting, to the access node by the user equipment, at least one of a first set of uplink reference signals based on the first uplink reference signal configuration associated with the non-uniform antenna ports or a second set of uplink reference signals based on the second uplink reference signal configuration associated with the uniform antenna ports and based on the configuration for the two patch feed connections.

An exemplary computer program product includes a computer-readable storage medium bearing instructions that, when executed by an apparatus, cause the apparatus to perform at least the following: for a user equipment supporting a hybrid antenna port configuration comprising uniform antenna ports and non-uniform antenna ports, determining a configuration for two patch feed connections on dual polarized panel elements of an antenna array to be used for transmission on the uniform antenna ports; receiving, by the user equipment from an access node, information indicative of a first uplink reference signal configuration associated with the non-uniform antenna ports and a second uplink reference signal configuration associated with the uniform antenna ports; and transmitting, to the access node by the user equipment, at least one of a first set of uplink reference signals based on the first uplink reference signal configuration associated with the non-uniform antenna ports or a second set of uplink reference signals based on the second uplink reference signal configuration associated with the uniform antenna ports and based on the configuration for the two patch feed connections.

In another exemplary embodiment, an apparatus comprises means for performing: for a user equipment supporting a hybrid antenna port configuration comprising uniform antenna ports and non-uniform antenna ports, determining a configuration for two patch feed connections on dual polarized panel elements of an antenna array to be used for transmission on the uniform antenna ports; receiving, by the user equipment from an access node, information indicative of a first uplink reference signal configuration associated with the non-uniform antenna ports and a second uplink reference signal configuration associated with the uniform antenna ports; and transmitting, to the access node by the user equipment, at least one of a first set of uplink reference signals based on the first uplink reference signal configuration associated with the non-uniform antenna ports or a second set of uplink reference signals based on the second uplink reference signal configuration associated with the uniform antenna ports and based on the configuration for the two patch feed connections.

### BRIEF DESCRIPTION OF THE DRAWINGS

The accompanying drawings use reference numerals, where the same reference numerals may be used to refer to like parts throughout, but parts having the same reference numeral can differ in operation and components. In the attached drawings:
FIG. 1 presents a coverage plot for different antenna implementations;
FIG. 2 illustrates Table 1, which describes a number of precoding combination for legacy TPMI, potential enhanced legacy TPMI and H-TPMI;
FIG. 3 is a flowchart of a method to select MIMO configuration for UEs with hybrid uniform and non-uniform antenna ports;
FIG. 4 is a signaling diagram for MIMO configuration for UEs with hybrid uniform and non-uniform antenna ports;
FIG. 4A is a signaling diagram for MIMO configuration for UEs with only uniform antenna ports;
FIG. 5 is a flowchart for MIMO configuration for UEs with hybrid uniform and non-uniform antenna ports, and corresponds to block 7 in FIG. 4 and block 5 in FIG. 4A;
FIG. 6A illustrates a linear array of panel elements for (e.g., part of) an antenna array;
FIG. 6B illustrates a square array of panel elements for (e.g., part of) an antenna array;
FIG. 6C illustrates that a single panel element may be rotated (e.g., by 45 degrees in this example);
FIG 6D illustrates a single polarization being used and a corresponding relative phase for a linear array;
FIG. 6E illustrates a dual polarization being used and corresponding relative phases for a linear array; and
FIG. 7 is a block diagram of one possible and non-limiting exemplary system in which the exemplary embodiments may be practiced.

### DETAILED DESCRIPTION OF THE DRAWINGS

Abbreviations that may be found in the specification and/or the drawing figures are defined below, at the end of the detailed description section.

The word "exemplary" is used herein to mean "serving as an example, instance, or illustration." Any embodiment described herein as "exemplary" is not necessarily to be construed as preferred or advantageous over other embodiments. All of the embodiments described in this Detailed Description are exemplary embodiments provided to enable persons skilled in the art to make or use the examples.

When more than one drawing reference numeral, word, or acronym is used within this description with "/", and in general as used within this description, the "/" may be interpreted as "or", "and", or "both". As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

It is noted that capital and lowercase words or phrases are considered to be the same herein. For instance, the words Slice, slice, and SLICE are the same, as are the phrases Network Repository Function, network repository function, and NETWORK REPOSITORY FUNCTION.

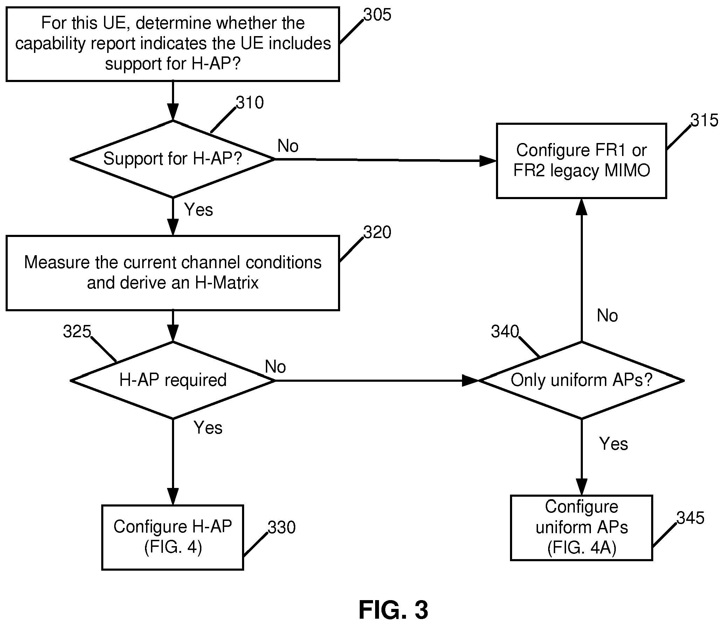

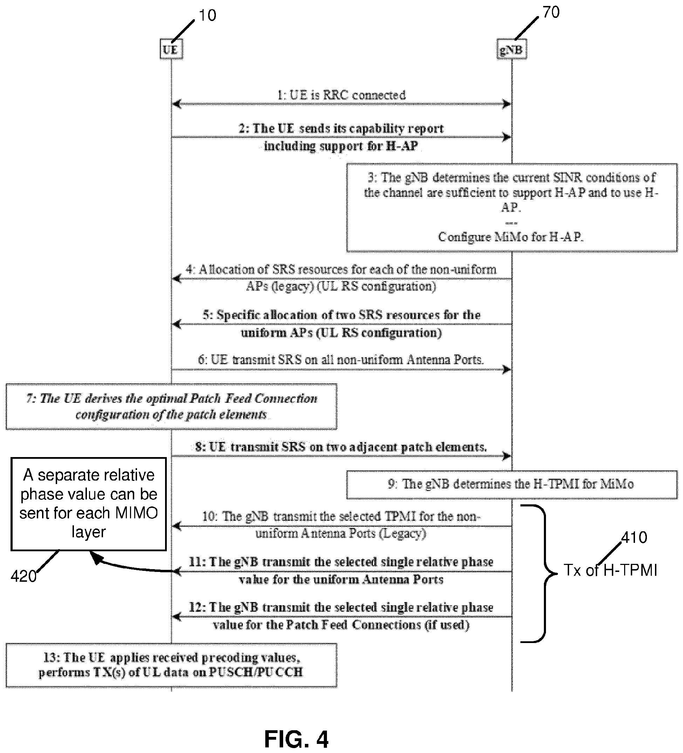

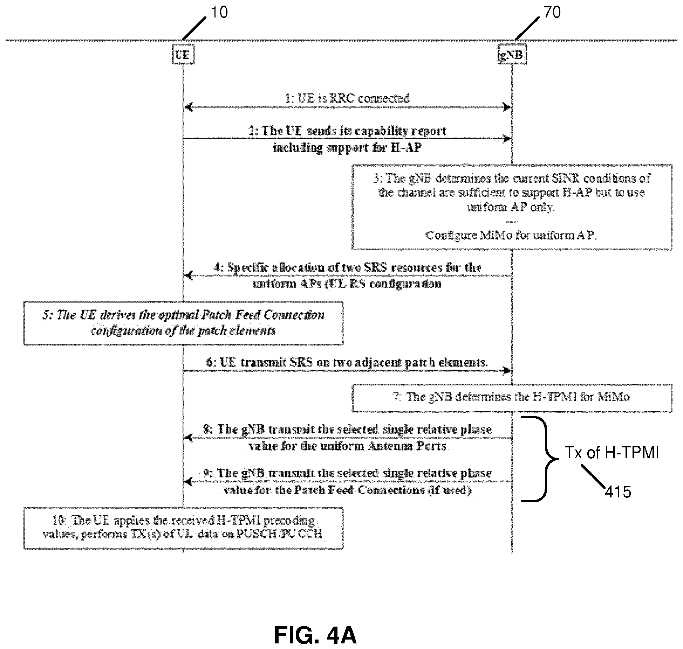

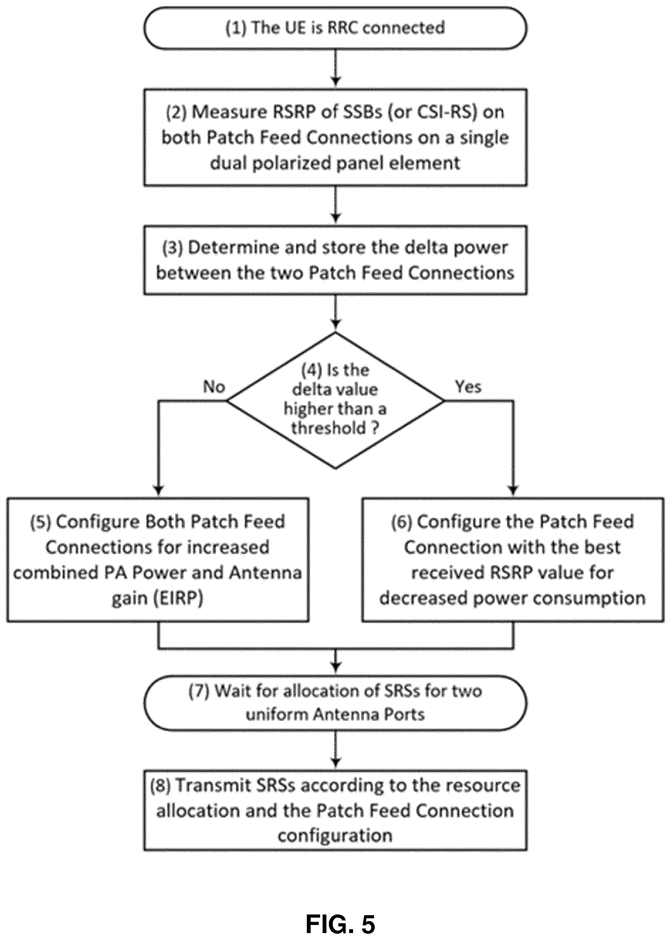

Flow diagrams (see FIGS. 3 and 5) or signaling diagrams (see FIGS. 4 and 4A) herein are considered to be logic flow diagrams, and illustrate the operation of an exemplary method, results of execution of computer program instructions embodied on a computer readable memory, and/or functions performed by logic implemented in circuitry. For methods, flow diagrams, and signaling diagrams, the orders of method steps, blocks in the flow, or signaling are not critical and instead are examples.

Technical context is now provided for technical areas related to the understanding of the examples. One such technical area concerns new frequency ranges.

The upcoming 6G (sixth generation) standard will include new frequency ranges compared to 5G (fifth generation). These new frequency ranges were agreed as target frequencies for 6G at the WRC-23 conference and are as follows:
1) 6G-1 = 4400 MHz to 4800 MHz;
2) 6G-2 = 7125 MHz to 8400 MHz; and
3) 6G-3 = 14800 MHz to 15350 MHz.

The new frequency ranges below 10 GHz are expected to be implemented using single element antennas utilizing digital beamforming (e.g., precoding) as currently used for 5G FR1 (frequency range 1) system bands. However, the frequency band at 15 GHz could be implemented as either as a FR1 system band or as a FR2 (frequency range 2) system band utilizing one or more antenna arrays relying on analog beamforming (e.g., beam sweeping).

The differences between digital and analog beamforming include the following.
1) Digital Beamforming: This represents the typical FR1 UE (user equipment) antenna implementation, where each individual antenna is or can be connected to an RF (radio frequency) branch, whereby the device can receive/transmit simultaneously on two or more antennas for a specific frequency band to support MIMO (multiple input, multiple output).

The beamforming for each MIMO layer is performed in the digital domain by distributing the MIMO layers across two or more Antenna Ports (APs) utilizing different pre-coding values (phase and/or amplitude).

Each of the individual antennas implemented on a handheld device like a smartphone (UEs for this document) will have different antenna characteristics (e.g., gain and phase) as a function of the angular directions in addition to different interspacing distances. As such, APs connected to these antennas can be considered to be non-uniform. A Uniform Linear Array (ULA) has equally spaced elements, where each element has the same antenna characteristics (e.g., including radiation patterns). As such, the definition of non-uniform here, includes one or both of spacing and antenna characteristics. That is, if the spacing between three or more elements are the same, but the antenna characteristics are not the same for two or more antenna elements, the APs connected to this antenna array are considered to be non-uniform.

The directivity of the radiation patterns for such antenna implementation is dependent on the frequency, where typical radiation patterns at lower frequencies (below 1 GHz) are close to omni-directional with a directivity of 3 to 4 dBi (decibel isotropic). The directivity can increase to 7 or 8 dBi as the frequency increases, making those radiation patterns more directional.

2) Analog Beamforming: This represents the typical antenna array implementation for FR2 frequencies at the UE. Each antenna array supports two orthogonal polarizations connected to separate RF branches that can receive or transmit an independent signal on each polarization at the same time to support two-layer MIMO. However, UEs with no support for UL (uplink) MIMO can in some implementations only transmit a common signal combined on both polarizations.

UEs are typically implemented with one dimensional antenna arrays including 4 or 5 elements (1x4 or 1x5) having an inter-element distance between 0.5 to 0.7 wavelength (λ). Each of the antenna elements in the antenna array will have the same antenna gain and phase characteristics as a function of the angular directions and the same inter-element distance. As such, those analog APs will be considered as belonging to a uniform linear array. A Uniform Linear Array (ULA) has equally spaced elements, where each element has the same antenna characteristics (e.g., including radiation patterns). As such, the definition of uniform here includes both spacing and antenna characteristics.

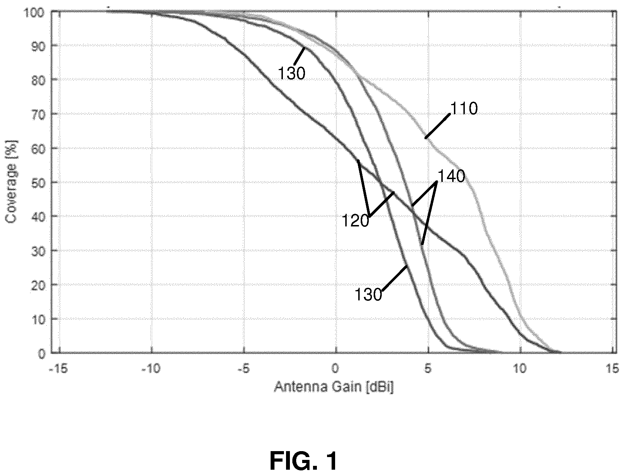

The directivity of such antenna arrays is around 12 to 14 dBi, resulting in high gain beams with a narrow radiation beam width. As the UE can only configure one beam for each polarization at any given time, the UE will have to configure multiple different full gain analog beams to cover the angular domain of the antenna array. As such, analog beam sweeping of individual full gain beams is required to increase the coverage, which is the typical approach for FR2. Even with analog beam sweeping, two or more antenna arrays are generally required to ensure acceptable coverage and resilience towards user interaction. See FIG. 1, which presents a coverage plot for different antenna implementations. An overview of this figure is provided now, and further details are provided below. Curve 110 = Two orthogonal 1x4 panels; curve 120 = One 1x4 panel; curve 130 = 4 individual monopole antennas (best antenna selection); and curve 140 = 4 individual monopole antennas (Digital pre-coding).

One main advantage of utilizing an antenna array compared to an individual antenna is the added available gain (approximately +6 dB for a 1x4 antenna array) in the angular directions covered by the antenna array. However, such an antenna array will have reduced gain in the angular directions not covered by the antenna array. This can of course be solved by implementing more than one antenna array into the device to increase the antenna gain in the other angular directions. Such an approach might not always be feasible, as antenna arrays require much more space in the device compared to a single element antenna, which is very critical for handheld devices like smartphones. As such, the implementation may be dependent on the formfactor of the device and especially handheld devices like smartphones will have to compromise available antenna gain versus required space in the device.

There are other technical problems to be addressed in these areas too. For instance, the size of a dual polarized 1x4 antenna array at 15GHz (6G-3) implemented on a substrate with a relative permittivity (εᵣ) of 6.15 is approximately (40. 4 x 8.3 x 1.0) mm, which means that edge placement on a handheld device like a smartphone (a first preferred placement for FR2 antenna arrays), will generally not be possible, as the typical thickness of a smartphone is less than 10 mm. Removing the thickness of the display module and the rear part, only antenna arrays with a width less than 5 to 6 mm can be placed at the edge of the device. A single polarized antenna array could be implemented at the edge of the device, but such an implementation would only support one MIMO layer in the angular directions covered by such an antenna array.

As such, it might only be practical to implement one antenna array at 15 GHz at the rear side of a smartphone (a second placement for FR2 antenna arrays), which as a standalone solution has limited coverage (see FIG. 1 and curve 120) and would on its own only support 2 MIMO layers, unless the antenna array is divided into two separate sections each supporting 2 MIMO layers (four in total) but with a 3 dB reduced antenna gain and added complexity. A different option is to combine a single antenna array with 2 to 4 individual antennas, which will result in an AP configuration relying partly on uniform APs and non-uniform APs (Hybrid APs). Possible number of antennas for the following different frequency band definitions are shown below:
1) 2 x LB = 663 MHz to 960 MHz.
2) 4 x MB/HB = 1710 MHz to 2690 MHz.
3) 4 x eUHB = 3300 MHz to 4800 MHz (including 6G-1).
4) 4 x 6G-2/3 = 7125 MHz to 8400 & 14800 MHz to 15350 MHz.
5) 1 x 6G-3 antenna array = 14800 MHz to 15350 MHz
6) 1 x FR2 antenna array = 24250 MHz to 29500 MHz & 37000 MHz to 43500 MHz.
7) 1 x FR2-1 antenna array = 24250 MHz to 29500 MHz.
8) 1 x FR2-2 antenna array = 37000 MHz to 43500 MHz.

As the 6G-3 frequency band (15 GHz) can be shared with the four individual antennas for 6G-2 (8 GHz), adding 2 to 4 x 6G-3 antennas in combination with a single dual polarized 6G-3 antenna array, will not increase the number of physical antennas and thereby not affect the mechanical stack-up of the device. However, it will require a slightly more complex RF (radio frequency) front end to enable switching of the 6G-3 signals from the transceiver to four individual antennas instead of for example only two individual antennas. The advantage of utilizing all four individual antennas is better adaptation to the current channel conditions and more resilience toward user interaction, as the four MIMO layers (AP) can be distributed across 4 out of 6 antennas (4 individual antennas and a single dual polarized antenna array).

The angular coverage is simulated on a 6G reference UE model for an implementation with four individual antennas (curves 130 and 140) and for one or two 1x4 antenna arrays (curves 110 and 120). The results are shown in FIG. 1 for the following antenna configurations and antenna implementations at the UE:

Curve 140: 3GPP pre-coding gain of 4 individual monopole-type antennas using 156 precoding values (1 AP, 2 APs, 3 APs and 4 APs, where all combinations using a 90° phase shift). The TPMI (Transmit Precoding Matrix Indicator) codebook defined for 5G only includes 28 entries, however a better granularity will be needed for higher frequencies and most likely will be included for 6G.

Curve 130: Best antenna selection between the 4 individual monopole-type antennas.

Curve 120: Single 1x4 antenna array configured with 7 different analog beams.

Curve 110: Two orthogonal 1x4 antenna arrays configured with a total of 14 different analog beams.

It can be seen from FIG. 1 and curve 110 that the best coverage performance is obtained by using two orthogonal 1x4 antenna arrays, which is the current preferred implementation for FR2 frequencies to ensure acceptable coverage, as the coverage of a single 1x4 antenna array is insufficient. However, that implementation will not be possible for the new 6G frequency band at 15 GHz, as mentioned above. The coverage of the hybrid AP solution will be a combination of the curves 120 and 140 in FIG. 1, where the single antenna array is used for high gain at 40 % (40 percent) of the angular domain and a digital combining (pre-coding) of four individual antennas is used for 60% of the angular domain.

Hybrid AP (H-AP) implementation (combination of uniform APs and non-unform APs) is not considered for 5G, as the practical implementation of antennas for FR1 on UEs are non-uniform APs relying on digital beamforming or only uniform APs for FR2 relying on traditional analog beam sweeping. An H-AP implementation will be transparent at the gNB for the following MIMO configurations:
1) Codebook-Based (CB) DL MIMO, as the UE can align a best beam at the array using SSB (Synchronization Signal Block) and/or CSI-RS (Channel State Information - Reference Signal) and thereafter select 4 physical APs out of 6 available physical APs for deriving the optimal PMI (Precoding Matrix Indicator) to feed back to the gNB.
2) Non-Codebook-Based (NCB) UL MIMO, as the UE only relies on DL reference signals to configure its beams for UL MIMO.

One problem is as follows. The gNB, however, will have to be informed of H-AP implementation at the UE for the following MIMO configurations:
1) CB UL MIMO, as the gNB will not know if an SRS is transmitted from a non-uniform or uniform AP. As such, SRSs transmitted from a non-uniform AP can be directly combined with one or more SRSs transmitted from different non-uniform APs to derive the optimal TPMI (as in a legacy mode).

However, the uniform APs may or may not be optimally beam aligned, as UE legacy analog beam alignment is based on DL reference signals alone. This is especially critical for 4x4 MIMO, where power in the channel is coming from a minimum of two different angular directions, whereby the UE may align the beam toward the suboptimal angular power direction (if the UE can detect that via the Power Delay Profile) as the UE does not know the optimal precoding for the non-uniform APs. The UE might even misalign its beam in this situation if the UE performs its beam alignment based on DL received power alone.

Enabling the gNB to assist the UE to configure the analog beam on the antenna array for 4x4 UL MIMO is beneficial.

2) SRS-Based DL beamforming (MIMO) has the same issue as above, where the UE cannot select the best beam for its uniform APs. This is in principle equivalent to non-codebook-based DL MIMO, however, that term is not used within the 3GPP context.

The examples herein may address a UE implementation with both types of antenna designs to obtain additional gain from a single antenna array combined with two or more space-efficient single antenna elements to increase the coverage not cover by the antenna array.

As such, the scope of this document defines, in examples, a signaling framework for the UE to inform the gNB of its H-AP implementation, so the gNB can allocate specific SRS reference signals for uniform APs and non-uniform APs to characterize the channel and derive a Hybrid TPMI (H-TPMI) for Codebook-Based UL MIMO and SRS-Based DL MIMO related to the addressed problem.

For UEs implemented with H-AP, examples herein disclose a concept for a gNB to derive H-TPMIs to assist the UE in configuring the best beams for (e.g., 4x4) MIMO. The following steps are considered to provide an overview, and more detailed signaling diagram can be found being described below.

Step #1: The UE signals to the gNB via its capability report that the UE 10 supports H-AP. This could also include the element spacing of the uniform APs.

Step #2: The gNB will signal to UE how to allocate specific SRS resources for the non-uniform AP and specific SRS resources for the uniform APs.

Step #3: The UE will transmit its SRSs according to gNB signaling.

Step #4: The gNB will derive a set of H-TPMIs to assist the UE in configuring the best beams for SRS-Based-DL MIMO and CB UL MIMO. A first legacy TPMI for the non-uniform APs (e.g., for CB_UL MIMO) and a second Phase Vector Indicator (PVI) type for the uniform APs (see below for more details).

Informing the gNB of the number of supported MIMO layers (and thereby indirectly number or Logical APs) is already part of the 5G specification for FR1 (non-uniform) and FR2 (uniform). However, the FR1 and FR2 reporting is independent of each other, as FR1 and FR2 frequencies never overlap. As such, adopting the legacy framework directly for the 6G-3 frequency band for UEs with H-AP implementation would inform the gNB that the UE supports up to 6x6 MIMO with 6 Logical APs, which would be incorrect, as the H-AP UE only supports 4 Logical APs (4x4 MIMO) on 6 possible Physical AP (individual antennas).

In examples herein, an H-AP UE will inform the gNB of this implementation in the capability report. This information will assist the gNB to allocate two different sets of SRSs, respectively, for non-uniform APs and for uniform AP, so the gNB knows when the UE is transmitting SRSs from non-uniform APs and uniform APs. However, the UE may still not know which beam configuration is the optimum for the uniform APs (the analog antenna array) and transmitting the SRS with a suboptimal beam configuration selected by the UE alone will result in the gNB deriving suboptimal H-TPMIs. The gNB can assist the UE in selecting the best beam for the uniform APs if the UE transmits the two SRSs from two adjacent single patches (in an example, the two center patches to maintain symmetry). Adjacent in this context are elements next to each other. A UE can in principle transmit the two SRSs on any combination of antenna array elements and use the reported PVI to configure the indicated beam. The UE could even toggle between different sets of antenna array elements, to perform a form of averaging to obtain high accuracy. The gNB will know that these two SRSs are transmitted from two uniform APs and can derive the best configurable beam at the antenna array, independent from the size of the antenna array, as the UE will know the element configuration used for transmitting the SRSs. The PVI reporting for the uniform APs may include a relative phase value for the individual patches in the antenna array (beamforming) and optionally a relative phase value for the two patch feed connections (PFCs) for pre-coding of the two MIMO streams transmitted from the antenna array. As such, the PVI report can include one or two indexes. It is noted that one option for use is a dual polarized array, so two PFCs, exciting different uncorrelated modes (e.g., orthogonal). Each of these two uncorrelated modes are typically for FR2 combined across all the elements in the antenna array, resulting in analog beam steering, that only supports two layers. Each antenna in FR1 is independently controlled, resulting in digital beam steering, where more than two beams can be applied at the same time. In FR3 (e.g., for 6G), there is an opportunity for both analog and/or digital implementation. Digital beam steering can evaluate all possible antenna combinations at the same time, while analog beam steering relies on sequential analog beam sweeping to find the best setting. Digital for four elements may be able to treat each element completely independently.

The resource allocation and transmission of SRSs from the non-uniform APs and the following TPMI reporting for those APs can be performed according to the current 5G FR1 specifications. As such, if the best set of UE APs for 4x4 CB UL MIMO is achieved with the four non-uniform APs, then the gNB will use legacy 4x4 MIMO TPMI reporting. However, if the best 4x4 MIMO performance is obtained using some uniform APs, then the gNB will use the following H-TPMI reporting:
1) 2x2 TPMI reporting for two Logical APs on four possible non-uniform Physical APs. Only the portion of the full legacy TPMI table intended for 2 APs is needed here. This is for CB UL MIMO.
2) A first PVI for beamforming of the uniform APs. This is for CB UL MIMO and SRS-Based DL MIMO.
3) A second PVI for antenna array patch pre-coding of the uniform APs. This is for CB UL MIMO.

Only one PVI for beamforming of the uniform APs is needed for UEs implemented with a linear antenna array (one dimension), which is the typical antenna array implementation for handheld services like smartphones. However, square antenna arrays are also a potential implementation in UEs, and such an implementation could be communicated to the gNB in the capability report. Such an implementation will require two PVIs for beamforming of the uniform APs, one for each dimension.

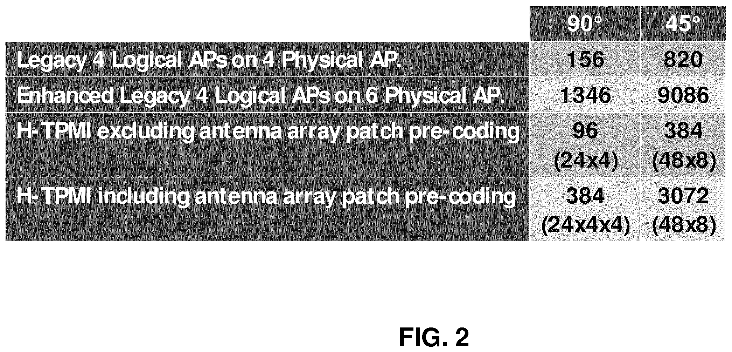

The total number on possible combinations for H-TPMI reporting for CB UL MIMO is illustrated in FIG. 2 using an enhanced codebook including all AP combinations using 90° or 45° phase shifts. FIG. 2 illustrates Table 1, which describes a number of precoding combinations for legacy TPMI, potential enhanced legacy TPMI, and H-TPMI. An enhanced codebook will be beneficial at 15 GHz, as the electrical distance between the non-uniform APs are increasing, which will result in very narrow beams.

It can be seen from Table 1 of FIG. 2 that expanding the legacy TPMI reporting to 4 Logical APs on 6 Physical AP will result in a static number of TPMI combinations (1346/9086) no matter the configuration of the APs at the UE. Whereas the disclosed H-TPMI reporting will reduce the number of precoding combinations by a factor of 3 to up to more than 20 depending on the H-AP configuration at the UE. Keep in mind that using an enhanced Legacy 4 Logical APs on 6 Physical AP TPMI codebook will still not enable the UE to configure the best narrow beam, as the gNB has no knowledge of the antenna array configuration used to transmit SRS from the antenna array or which of the 6 SRSs is transmitted from the antenna array. This will result in suboptimal TPMI selection and degrade the MIMO performance, as the TPMI will be derived with a potential sub-optimal analog beam configuration selected by the UE when transmitting the SRSs.

Advantages and technical effects include the following:
1) There is a reduced number of TPMI combinations obtaining the same precoding MIMO quality, by a factor of 3 to up to more than 20 depending on the H-AP configuration at the UE.
2) The examples may ensure a best beam configuration for the antenna array (uniform APs) at the UE.
3) There can be a fixed number of SRS transmissions from uniform APs, independent of the antenna array size.

Now that an overview has been provided, additional details are provided. Referring to FIG. 3, this figure is a flowchart of a method to select MIMO configuration for UEs with hybrid uniform and non-uniform antenna ports. It is possible that a UE 10 does or does not support H-AP, and for the UEs that do support H-AP, these can use H-AP (where both non-uniform and uniform APs are used, see FIG. 4) or only uniform APs (see FIG. 4A). FIG. 3 addresses this complexity.

The operations in FIG. 3 are performed by a gNB 70. In block 305, the gNB determines, for this UE, whether the capability report indicates the UE includes support for H-AP. The capability report is a message from the UE 10 to the gNB 70 that indicates certain capabilities the UE has, and support for H-AP is one possibility. If the UE does not support H-AP, the UE would most likely simply not indicate support for H-AP (e.g., instead of indicating the UE explicitly not support H-AP). If there is no support (e.g., indicated) for H-AP (block 310 = No), the flow proceeds to block 315, where the gNB 70 configures FR1 or FR2 legacy MIMO up to the number of supported layers. In this context, the term "legacy" means as of the date of this document but not part of the examples herein. If there is support (e.g., indicated) for H-AP (block 310= Yes), the flow proceeds to block 320, where the gNB 70 measures the current channel conditions (e.g., SINR, signal-to-interference-plus-noise ratio, conditions) and derives an H-Matrix (e.g., for the channel). Based at least on the derived H-Matrix, the gNB 70 determines if H-AP is required. If H-AP is not required (block 325 = No), flow proceeds to block 340, where the gNB 70 determines whether only uniform APs will be used. If not (block 340 = No), the flow proceeds to block 315, where a legacy technique is used. If only uniform APs are to be used (block 340 = Yes), the flow proceeds to block 345, where the gNB configures the uniform APs (see FIG. 4A). If the gNB 70 decides that H-AP is required (block 325 = Yes), the gNB 70 configures H-AP in block 330 (see FIG. 4).

For blocks 325 and 340, which is selected depends on the channel conditions. For example, the channel might only support 2x2 MIMO on two uniform APs (thus, block 340 = Yes) or two non-uniform APs (thus, block 325 = Yes), and thereby the gNB will not have to configure H-AP for UL MIMO (and instead will perform block 345).

A signaling chart of an exemplary procedure for H-AP is shown in FIG. 4. The signaling in FIG. 4 is between a UE 10 and gNB 70. FIG. 4 is a signaling diagram for MIMO configuration for UEs with hybrid uniform and non-uniform antenna ports. The signaling is broken into a number of steps. Steps 2 and 3 are assumed to be performed by FIG. 3, but are shown here to present these in a signaling diagram format.

Step #1: The UE is assumed to be RRC connected to the gNB (e.g., the UE has performed a random-access channel procedure to connect to the gNB).

Step #2: The UE 10 indicates to the gNB 70 via the UE capability report that the UE supports H-AP (i.e., configuration of non-uniform and uniform APs).

Step #3: The gNB 70 determines the current channel conditions support H-AP MIMO configuration and to use H-AP. This step will require previous transmitted legacy reference signals between the gNB and the UE (not shown in the signaling diagram). This configures in this example 4x4 MIMO for H-AP, i.e., two layers for non-uniform APs and two layers from uniform APS.

Step #4: The gNB 70 allocates specific SRS resources for the non-uniform APs (legacy). The is a first uplink reference signal configuration associated with the non-uniform antenna ports.

Step #5: The gNB 70 allocates two specific SRS resources for the uniform APs. This is a second uplink reference signal configuration associated with the uniform antenna ports.

Step #6: The UE transmits SRSs from the non-uniform APs. This can be simultaneously or sequentially performed depending on the allocation and/or UE implementation.

Step #7: The UE 10 derives the optimal patch feed connection configuration of the dual polarization patch elements. This is described in more detail below.

Step #8: The UE 10 transmits two SRSs from two adjacent patch elements. This can be simultaneously or sequentially performed depending on the SRS allocation for the gNB and/or UE implementation.

Step #9: The gNB 70 determines the (e.g., optimal) H-TPMI, including a legacy (e.g., 2x2) TPMI for the non-uniform APs, the relative phase value for the uniform AP (beamforming), and the relative phase value for the two patch feed connections on each patch in the antenna array (pre-coding).

Step #10: The gNB 70 transmits the selected 2x2 TPMI for the non-uniform APs to the UE 10. This is a legacy operation.

Step #11: The gNB 70 transmits the selected single relative phase value for the uniform Antenna Ports.

Step #12: The gNB 70 transmits the selected single relative phase value for the patch feed connections. This step is optional, as phase pre-coding between the two orthogonal beams at the antenna array might not be needed.

It is noted that the relative phase value in Step #11 for the patch elements will determine the beam steering direction, for both polarizations. The relative phase value in Step #12 can be used to add a relative phase difference between the two MIMO layers, each transmitted on an individual polarization.

It is noted that other embodiments are possible. For instance, a separate relative phase value can be sent for each MIMO layer, see block 420. As one example, if the UE has indicated a linear antenna array, but receives two relative phase values, then the UE knows that the first relative phase value is for the first AP and the second relative phase values is for the second AP. By contrast, a single received relative phase value will be used for both MIMO Layers.

Step #13: The UE 10 applies the received precoding values from steps #10, #11, and #12, when transmitting (as one or more UL data transmissions) the next scheduled PUSCH (physical uplink shared channel) and/or PUCCH (physical uplink control channel) messages.

It is noted that H-TPMI in this example includes a legacy TPMI for the non-uniform APs (see step #10) and the one or more PVIs (see steps #11 and #12), depending on the antenna array type, where the PVIs include the relative single-phase values for the uniform antenna ports and possibly the single relative phase value for the patch feed. This is indicated by reference 410, where the H-TPMI is transmitted (Tx). These are shown being transmitted separately for ease of reference. However, the legacy TPMI and the PVIs can be included in the same or different DCI messages. Including them in the same DCI may be performed by using different IEs (information elements) as one implementation.

Referring to FIG. 4A, this figure is a signaling diagram for MIMO configuration for UEs with only uniform antenna ports. This example corresponds to block 345 of FIG. 3, and steps 2 and 3 herein are performed by FIG. 3, but are shown here to present these in a signaling diagram format. Steps 1 and 2 are the same as in FIG. 4.

Step #3: The gNB 70 determines that the current channel conditions support H-AP MIMO configuration and that only uniform APs will be used. This step will require previous transmitted legacy reference signals between the gNB and the UE (not shown in the signaling diagram. This configures MIMO for uniform APs with the number of layers limited by either the channel conditions or the UE implementation for uniform APs.

Step #4: The gNB 70 allocates two specific SRS resources for the uniform APs. This is an uplink reference signal configuration associated with the uniform antenna ports.

Step #5: The UE 10 derives the optimal patch feed connection configuration of the dual polarization patch elements. This is described in more detail below.

Step #6: The UE 10 transmits two SRSs from two adjacent patch elements. This can be simultaneously or sequentially performed depending on the allocation and/or UE implementation.

Step #7: The gNB 70 determines the (e.g., optimal) H-TPMI for (e.g., 2x2) MIMO, including the relative phase value for the uniform AP (beamforming), and the relative phase value for the two patch feed connections on each patch in the antenna array (pre-coding).

Step #8: The gNB 70 transmits the selected single relative phase value for the uniform Antenna Ports.

Step #9: The gNB 70 transmits the selected single relative phase value for the patch feed connections. This step is optional, as phase pre-coding between the two orthogonal beams at the antenna array might not be needed.

Steps 8 and 9 are the transmission (Tx) of H-TPMI, indicated by reference 415. This version does not contain the TPMI for the non-uniform APs.

Step #10: The UE 10 applies the received H-TPMI precoding values from steps 8 and 9, when transmitting (as UL data transmission(s)) the next scheduled PUSCH and/or PUCCH messages.

One main use case is described as follows. The Equivalent Isotropic Radiated Power (EIRP) will be reduced for the SRSs transmitted from a single patch on the antenna array compared to full array, as the EIRP will lose 6 dB potential antenna gain (1x4 antenna array) and 3 to 6 dB reduced PA power depending if the polarization of the channel is equally distributed between the two orthogonal polarizations on the patch elements or not. See below for additional description of this. The maximum PA (power amplifier) power for each of the PAs connected to each patch feed connection at the antenna array will only have to be 17 dBm for a 1x4 antenna array to reach a combined total UL transmission power of 23 dBm for each polarization separately.

As such, H-TPMI can be used when the signal conditions allow the gNB to detect SRSs transmitted with 9-12 dB less power (EIRP) at the UE. However, this will be an issue for UEs in bad signal conditions and such UEs will most likely not be capable of supporting 4x4 MIMO as the power in the channel will most likely only be coming from one angular direction and thereby only support maximum 2x2 MIMO. In this case, the system will automatically revert to legacy FR2 MIMO to utilize the antenna gain of the antenna array.

One example of a main implementation is now described. Include the following information in the UE capability report from Step #2: UE support for H-APs.

Include the following three Information Elements in for example a DCI message, e.g., for step 5:
1) Specific allocation of SRS resources for uniform APs (minimum two SRS allocations).
2) A first PVI for the relative phase value for the uniform APs.
3) A second PVI for the patch feed connections on each antenna array patch element.

A second main implementation is as follows.

Include the following information in the UE capability report from step 2:
1) UE support for H-APs.
2) UE antenna array type, e.g., linear or square.

Include the following three Information Elements in for example a DCI message as in step 5:
1) Specific allocation of SRS resources for uniform APs (minimum three SRS allocations).
2) A first PVI for the relative phase value for the uniform APs, based on the first and second SRS.
3) A second PVI for the relative phase value for the uniform APs, based on the first and third SRS.
4) A third PVI for the patch feed connections on each antenna array patch element.

A third main implementation is now described.

A potential UE procedure for selecting the optimal configuration of the two patch feed connections for each patch element is shown in FIG. 5. FIG. 5 is a flowchart for MIMO configuration for UEs with hybrid uniform and non-uniform antenna ports.

Step #1: The UE 10 is assumed to be RRC connected (has performed a random-access procedure to connect to the gNB 70).

Step #2: The UE 10 will measure DL reference signals, like RSRP of SSBs and/or CSI-RS, for each patch feed connection on one or more antenna array patches.

Step #3: The UE 10 determines the delta power (e.g., via a power metric) between the two patch feed connections and stores that value.

Step #4: The UE 10 determines whether the stored delta power value (e.g., of the power metric) is higher than a threshold, for example 6 dB or 10 dB. If No (does not meet the threshold), go to Step #5. If Yes (does meet the threshold), go to Step #6. Step 5 attempts to apply approximately equal power to both patch feed connection, while step 6 applies power to only one patch feed connection, although this will depend on the polarization of the channel compare to the physical orientation of the UE antenna array.

Step #5: The UE delta power between the orthogonal polarizations on the patch elements is acceptable for distributed transmission on both polarizations on the patch elements (potential 3 dB increase in EIRP for equal antenna gain distribution). Both patch feed connections are configured for increased combined PA power and antenna gain (EIRP), as that will increase the power delivered to the UE antenna array by up to 3 dB (the number of used PAs is increased by a factor of 2).

Step #6: The UE delta power between the orthogonal polarizations on the patch elements is not acceptable for distributed transmission on both polarizations on the patch elements and the polarization receiving the higher power level is used for SRS transmission (resulting in increased power efficiency, as only half of the PAs are used). The patch feed connection is configured with the best received RSRP value for decreased power consumption. In more detail, the UE power control (open or closed loop) will ensure that all UL transmissions for UEs in a cell, are received at the gNB with the same power level. As such, selecting the polarization receiving the best RSRP values will decrease the required output level of the PA for a given received power level at the gNB.

Step #7: Wait for the gNB 70 to allocate resources for SRS transmission, e.g., for two uniform antenna ports.

Step #8: The UE 10 will transmit a first SRS with the configured patch feed connection(s) for a first antenna array patch element and transmit a second SRS with the configured patch feed connection(s) for a second antenna array patch element adjacent to the first antenna array patch element. This could be two orthogonal SRSs simultaneously or two SRSs time-duplexed, depending on the resource allocation from the gNB.

It is noted that the decision in Step #4, is valid for all elements in the array. Steps #2 to #6 would be performed for all available MIMO layers.

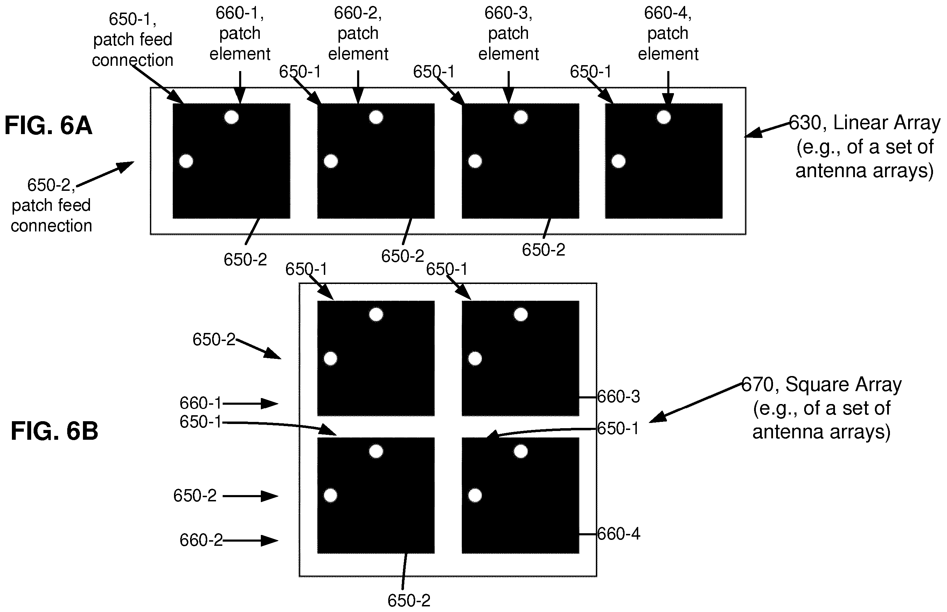

FIGS. 6A-6E describe antenna arrays that have different structures and that use different patch feed connections to excite different polarizations. FIGS. 6A-6E are simplified illustrations of different arrays, or parts of arrays, of patch elements. These are meant as examples and may be changed in multiple ways, as described below.

For FR2 (current 5G mmW, millimeter wave, frequency band), antennas are typically arranged in the form of 2-3 antenna arrays (see FIGS. 6A and 6B). Each antenna array has 4~5 dual-port dual-polarized patch elements, where the patch element is often a square-shape (or 45-rotate diamond shape). The square-shape is used here as an example. The patch element can be of a rectangular-shape or any other shapes. In a uniform linear array, all square-shaped patch antennas are placed with equal-spacing along a line-aperture, whereas in a uniform square array, all square-shaped patch antennas are placed equal-spacing along a square-aperture. For FR2 implementation in a UE device, a linear array is typically used for edge implementation of the device on the side, whereas a linear or a square array is typically used for rear implementation of the device on the back.

For the 6G band described herein, the antenna arrangement can be hybrid, so that some antennas can be placed typically along the frame of the UE as a non-uniform antenna element, whereas some other antennas can be placed in a uniform array. These various types of elements are described in part below.

Referring to FIG. 6A, this figure illustrates a linear array 630 of panel elements 660 for (e.g., part of) a set of antenna arrays. This linear array 630 could be one antenna array of a set of antenna arrays, which could contain this and only this linear array 630, or could contain multiple such linear arrays 630, or one or more linear arrays 630 plus other arrays (not shown). There are four patch elements 660-1, 660-2, 660-2, and 660-4, and this number of patch elements is just an example and could be lower or higher. This example can be formed in a uniform linear array, where all square-shaped patch elements are placed with equal-spacing along a line-aperture. The term "patch element" is used herein to be consistent with FIG. 5, and this term may be simplified to "patch" (as used above) or may be referred to by other terms such as "panel element". Each patch element 660 has two patch feed connections 650-1 and 650-1, and each of these excites a different polarization. The term "patch feed connection" is chosen to align with the terminology in FIG. 5, but can be referred to by other terminology, such as "patch feed" or other terms. The locations of the patch feed connections 650 are in locations that are examples and the locations may be changed.

Turning to FIG. 6B, this figure illustrates a square array 670 of patch elements 660 for (e.g., part of) a set of antenna arrays. This may be an antenna array of a set of multiple antenna arrays. This square array 670 has four patch elements 660-1, 660-2, 660-3, and 660-4, arranged in a square formation. This example forms a uniform square array where all square-shaped patch elements 660 are placed with equal-spacing along a square-aperture.

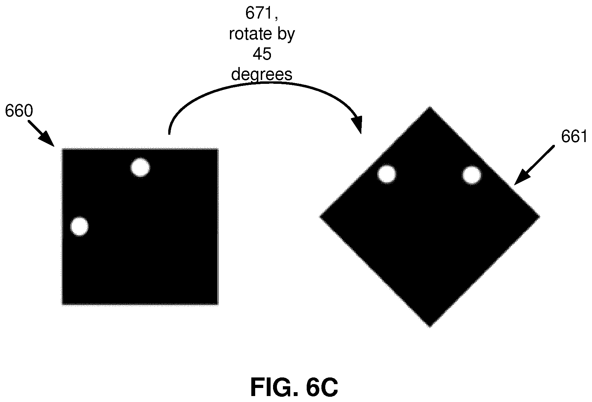

FIG. 6C illustrates that a single panel element 660 may be rotated (e.g., by 45 degrees in this example), see reference 671, to form a diamond patch element 661. This illustrates that patch element 660 can be 45-degree-rotated to be a diamond shape. For instance, the square array 670 of FIG. 6B could be also formed if all four patch elements 660 (but not its ground plane) are rotated by 45 degrees. When forming an antenna array, the feeding port location for each patch antenna element of the array can be at different positions (now there are at the same position for each patch, but they can be placed in many positions, like mirrored, sequentially rotated by 90-degrees, and the like).

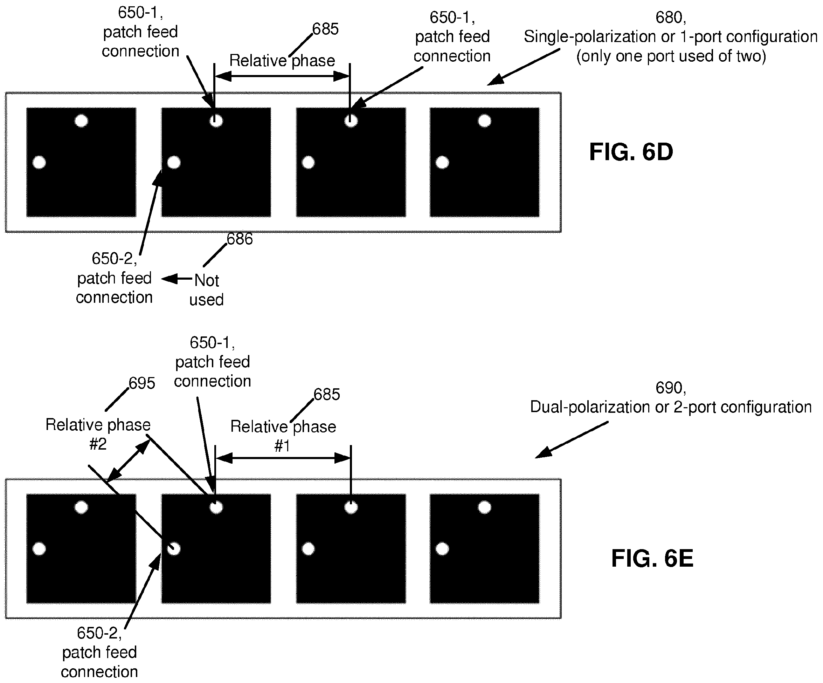

Turning to FIG. 6D, this figure illustrates a single polarization (also referred to as a 1-port configuration) being used and a corresponding relative phase for a linear array. This example shows that the patch feed connections 650-1 are used for each patch element 660, but the patch feed connections 650-2 are not used (see reference 686) for each patch element 660, which means only a single polarization is excited. In another example, it could be that the patch feed connections 650-2 are used for each patch element 660, but the patch feed connections 650-1 are not used. In FIG. 6D, there is a relative phase 685 that can be adjusted and that is between the patch feed connections 650-1 for the two adjacent patch elements 660 shown, though the relative phase 685 is between every set of two adjacent patch elements and their corresponding patch feed connections 650-1. This relative phase 685 is adjusted in step #11 of FIG. 4 and in step 8 of FIG. 4A.

FIG. 6E illustrates a dual polarization (also referred to as a 2-port configuration) being used and corresponding relative phases for a linear array. This example is similar to the example of FIG. 6D, but both patch feed connections 650-1 and 650-2 are used to excite both polarizations. There is a first relative phase 685 that can be adjusted and that is between the patch feed connections 650-1 for the two adjacent patch elements 660, as well as between the patch feed connections 650-2 for the two adjacent patch elements 660, as illustrated, though the relative phase 685 is between every set of two adjacent patch elements and their corresponding patch feed connections. This first relative phase 685 is adjusted in step 11 of FIG. 4 and in step 8 of FIG. 4A.

There is a second relative phase 695 that may also be modified, and that is between the two patch feed connections 650-1 and 650-2, as illustrated, though the relative phase 695 is between the two patch feed connections of every patch element. This second relative phase is adjusted in step 12 of FIG. 4 and in step 9 of FIG. 4A.

It is noted that the first relative phase value for the patch elements will determine the beam steering direction, for both polarizations. The second relative phase value can be used to optionally add a relative phase difference between the two MIMO layers, each transmitted on an individual polarization.

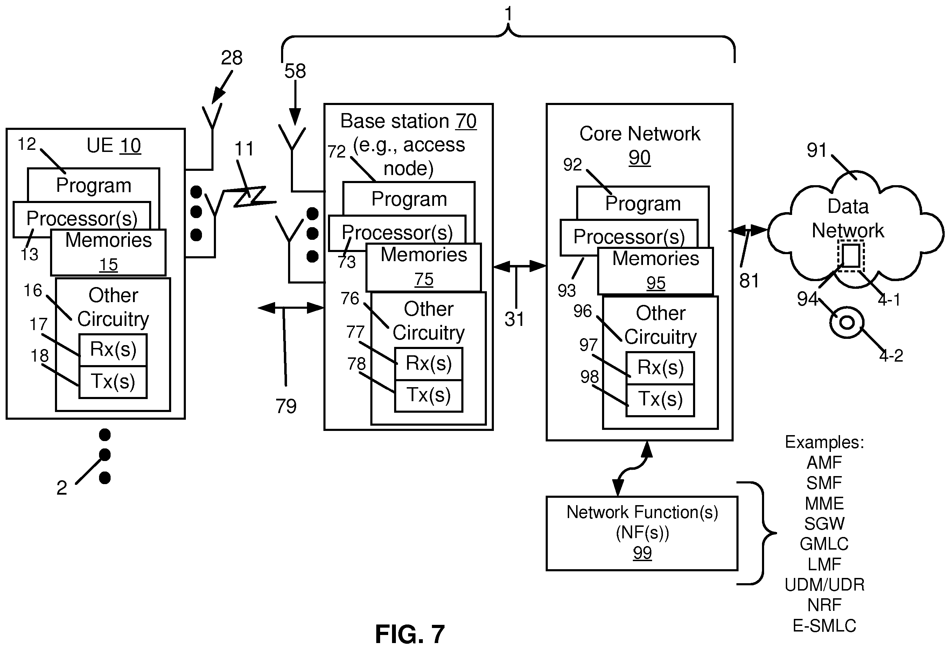

Turning to FIG. 7, this figure shows a block diagram of one possible and non-limiting example of a cellular network 1 that is connected to a user equipment (UE) 10. A number of network elements are shown in the cellular network of FIG. 7: a base station 70; and a core network 90.

In FIG. 7, a user equipment (UE) 10 is in wireless communication via radio link 11 with the base station 70 of the cellular network 1. A UE 10 is a wireless communication device, such as a mobile device, that is configured to access a cellular network. The UE 10 is illustrated with an antenna array 28. The ellipses 2 indicate there could be multiple UEs 10 in wireless communication via radio links with the base station 70. The UE 10 includes one or more processors 13, one or more memories 15, and other circuitry 16. The other circuitry 16 includes one or more receivers (Rx(s)) 17 and one or more transmitters (Tx(s)) 18. A program 12 is used to cause the UE 10 to perform the operations described herein. For a UE 10, the other circuitry 16 could include circuitry such as for user interface elements (not shown) like a display. The program 12 may be implemented via instructions stored in memory/memories 15 and executed by processor(s) 13, or by circuitry such being implemented as part of the processor(s) or other circuitry elements, or both.

The base station 70, as a network element of the cellular network 1, provides the UE 10 access to cellular network 1 and to the data network 91 via the core network 90 (e.g., via a user plane function (UPF) of the core network 90). As such, the base station 70 may be considered to be an access node, which provides access by UE(s) 10 to the cellular network 1. The base station 70 is illustrated as having one or more antennas 58. In general, the base station 70 may be referred to as RAN node 70, although many will make reference to this as a gNB (gNode B, a base station for NR, new radio) instead. There are, however, many other examples of RAN nodes including an eNB (evolved Node B) or TRP (Transmission-Reception Point). The base station 70 includes one or more processors 73, one or more memories 75, and other circuitry 76. The other circuitry 76 includes one or more receivers (Rx(s)) 77 and one or more transmitters (Tx(s)) 78. A program 72 is used to cause the base station 70 to perform the operations described herein. The program 72 may be implemented via instructions stored in memory/memories 75 and executed by processor(s) 73, or by circuitry such being implemented as part of the processor(s) or other circuitry elements, or both.

It is noted that the base station 70 may instead be implemented via other wireless technologies, such as Wi-Fi (a wireless networking protocol that devices use to communicate without direct cable connections). In the case of Wi-Fi, the link 11 could be characterized as a wireless link.

Two or more base stations 70 communicate using, e.g., link(s) 79. The link(s) 79 may be wired or wireless or both and may implement, e.g., an Xn interface for 5G (fifth generation), an X2 interface for LTE (Long Term Evolution), or other suitable interface for other standards.

The cellular network 1 may include a core network 90, as a second network element or elements, that may include core network functionality, and which provide connectivity via a link or links 81 with a data network 91, such as a telephone network and/or a data communications network (e.g., the Internet). The core network 90 includes one or more processors 93, one or more memories 95, and other circuitry 96. The other circuitry 96 includes one or more receivers (Rx(s)) 97 and one or more transmitters (Tx(s)) 98. A program 92 is used to cause the core network 90 to perform the operations described herein. The program 92 may be implemented via instructions stored in memory/memories 95 and executed by processor(s) 93, or by circuitry such being implemented as part of the processor(s) or other circuitry elements, or both.

The core network 90 could be a 5GC (5G core network). The core network 90 can implement or comprise multiple network functions (NF(s)) 99, and the program 92 may comprise one or more of the NFs 99. A 5G core network may use circuitry such as memory and processors, which may implement a virtualization layer. It could be a single standalone computing system, a distributed computing system, or a cloud computing system. The NFs 99, as network elements, of the core network could be containers or virtual machines running on the circuitry of the computing system(s) making up the core network 90.

Core network functionality for 5G may include access and mobility management functionality that is provided by a network function 99 such as an access and mobility management function (AMF), session management functionality that is provided by a network function such as a session management function (SMF). Core network functionality for access and mobility management in an LTE (Long Term Evolution) network may be provided by an MME (Mobility Management Entity) and/or SGW (Serving Gateway) functionality, which routes data to the data network. Many others are possible, as illustrated by the examples in FIG. 7: AMF; SMF; MME; SGW; GMLC (Gateway Mobile Location Center); LMF (Location Management Function); UDM (Unified Data Management)/UDR (Unified Data Repository); NRF (Network Repository Function); and/or E-SMLC (Evolved Serving Mobile Location Center). These are merely exemplary core network functionality that may be provided by the core network 90, and note that both 5G and LTE core network functionality might be provided by the core network 90. The base station 70 is coupled via a backhaul link 31 to the core network 90. The base station 70 and the core network 90 may include an NG (Next Generation) interface for 5G, or an S1 interface for LTE, or other suitable interface for other radio access technologies for communicating via the backhaul link 31.

In the data network 91, there are instructions 94 stored in a computer-readable storage medium 4-1, which could be circuitry such as long-term memory such as a hard drive or a solid-state drive, a short-term memory such as dynamic random-access memory, or a combination of both (e.g., reading from long-term memory for temporary placement into short-term memory and subsequent downloading). The computer-readable storage medium 4-1 contains instructions 94 that, when downloaded and installed into the programs 12, 72, and 92 and/or memories 15, 75, or 95 of the corresponding UE 10, base station 70, and/or core network element(s) 90, and executed by processor(s) 13, 73, or 93, cause the respective device to perform corresponding actions described herein. The computer-readable storage medium 4 may be implemented in other forms, such as via instructions 94 on a compact disc (as a computer-readable storage medium 4-2) or a memory stick.

The programs 12, 72, and 92 contain instructions (as part of a corresponding program 12, 72, and 92) stored by corresponding one or more memories 15, 75, or 95. These instructions, when executed by the corresponding one or more processors 13, 73, or 93, cause the corresponding apparatus 10, 70, or 90, to perform the operations described herein. The computer readable memories 15, 75, or 95 are circuitry and may be of any type suitable to the local technical environment and may be implemented using any suitable data storage technology, such as semiconductor-based memory devices, flash memory, firmware, magnetic memory devices and systems, optical memory devices and systems, fixed memory and removable memory. The processors 13, 73, and 93, are circuitry and may be of any type suitable to the local technical environment. For example, these processors may include one or more of general-purpose computers, special purpose computers, microprocessors, digital signal processors (DSPs), processors based on a multi-core processor architecture, and may also include specialized circuits such as field-programmable gate arrays (FPGAs), application specific circuits (ASICs), signal processing devices and other devices, or combinations of these devices, as non-limiting examples. The processors 13, 73, and 93 are circuitry that can be programmed to perform functions via software, firmware or the like (including microcode), but are not solely software.

The receivers 17, 77, and 97, and the transmitters 18, 78, and 98 may implement wired or wireless interfaces. The receivers and transmitters may be grouped together as transceivers.

The cellular network 1 may implement network virtualization, which is the process of combining circuitry and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities (such as network functions 99) that result from the network virtualization are still implemented, at some level, using circuitry such as processors 73 and/or 93 and memories 75 and/or 95, and also such virtualized entities create technical effects.

In general, the various embodiments of the user equipment 10 can include, but are not limited to, devices implementing cellular technologies (such as smart phones, mobile phones, cellular phones, voice over Internet Protocol (IP) (VoIP) phones, and/or wireless local loop phones), tablets, portable computers, vehicles or vehicle-mounted devices for, e.g., wireless V2X (vehicle-to-everything) communication, image capture devices such as digital cameras, gaming devices, music storage and playback appliances, Internet appliances (including Internet of Things, IoT, devices), IoT devices with sensors and/or actuators for, e.g., automation applications, as well as portable units or terminals that incorporate combinations of such functions, laptop-embedded equipment (LEE), laptop-mounted equipment (LME), Universal Serial Bus (USB) dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. That is, the UE 10 could be any end device that may be capable of wireless communication. By way of example rather than limitation, the UE may also be referred to as a communication device, terminal device (MT), a Subscriber Station (SS), a Portable Subscriber Station, a Mobile Station (MS), or an Access Terminal (AT).

The following are additional examples.

Example 1. A method, comprising: for a user equipment supporting a hybrid antenna port configuration comprising uniform antenna ports and non-uniform antenna ports, determining a configuration for two patch feed connections on dual polarized panel elements of an antenna array to be used for transmission on the uniform antenna ports; receiving, by the user equipment from an access node, information indicative of a first uplink reference signal configuration associated with the non-uniform antenna ports and a second uplink reference signal configuration associated with the uniform antenna ports; and transmitting, to the access node by the user equipment, at least one of a first set of uplink reference signals based on the first uplink reference signal configuration associated with the non-uniform antenna ports or a second set of uplink reference signals based on the second uplink reference signal configuration associated with the uniform antenna ports and based on the configuration for the two patch feed connections.

Example 2. The method according to example 1, wherein determining the configuration for the two patch feed connections on the dual polarized panel elements to be used for transmission on the uniform antenna ports comprises: measuring downlink reference signals for the two patch feed connections using at least a power metric; determining a delta between the power metric for the two patch feed connections; and determining the configuration for the two patch feed connections based on the determined delta.

Example 3. The method according to example 2, wherein determining the configuration for the two patch feed connections based on the determined delta comprises: configuring the two patch feed connections for distributed transmission on both polarizations on the dual polarized panel elements based on the determined delta not meeting a threshold.

Example 4. The method according to example 3, wherein the determined delta does not meet the threshold because the determined delta is less than the threshold.

Example 5. The method according to one of example 3 or 4, wherein the two patch feed connections are configured for increased combined power amplified power and antenna gain relative to using only one of the patch feed connections.

Example 6. The method according to example 2, wherein determining the configuration for the two patch feed connections based on the determined delta comprises: configuring the two patch feed connections for transmission on one patch feed connection of the two patch feed connections based on the determined delta meeting a threshold.

Example 7. The method according to example 6, wherein the determined delta meets the threshold because the determined delta is higher than the threshold.

Example 8. The method according to one of example 6 or 7, wherein the one patch feed connection is a patch feed connection of the two patch feed connections that has a best value of the power metric for the two patch feed connections.

Example 9. The method according to any of examples 1 to 8, further comprising: receiving, by the user equipment from the access node, precoding information comprising a phase vector indicator indicative of at least one phase value associated with the uniform antenna ports; and transmitting, by the user equipment, one or more uplink data transmissions based on the received precoding information comprising the phase vector indicator.

Example 10. The method according to example 9, wherein: the at least one phase value comprises a single relative phase value for the uniform antenna ports.

Example 11. The method according to any of examples 9 or 10, wherein: the at least one phase value comprises a single relative phase value for the two patch feed connections for the antenna array used for the uniform antenna ports.

Example 12. The method according to any of examples 9 to 11, wherein the one or more uplink data transmissions are performed using one or both of a physical uplink shared channel or a physical uplink control channel.

Example 13. The method according to any of examples 1 to 12, further comprising providing, by the user equipment, information to the access node about capability of the user equipment to support the hybrid antenna port configuration using a capability report sent from the user equipment to the access node.

Example 14. The method according to example 13, wherein the providing information to the access node about the capability of the user equipment to support the hybrid antenna port configuration also comprises indicating antenna array type of the user equipment.

Example 15. The method according to example 14, wherein the antenna array type comprises one or both of linear or square.

Example 16. The method according to any of examples 14 to 15, wherein the providing information to the access node about the capability of the user equipment to support the hybrid antenna port configuration also comprises indicating element spacing of the uniform antenna ports.

Example 17. An apparatus, comprising means for: for a user equipment supporting a hybrid antenna port configuration comprising uniform antenna ports and non-uniform antenna ports, determining a configuration for two patch feed connections on dual polarized panel elements of an antenna array to be used for transmission on the uniform antenna ports; receiving, by the user equipment from an access node, information indicative of a first uplink reference signal configuration associated with the non-uniform antenna ports and a second uplink reference signal configuration associated with the uniform antenna ports; and transmitting, to the access node by the user equipment, at least one of a first set of uplink reference signals based on the first uplink reference signal configuration associated with the non-uniform antenna ports or a second set of uplink reference signals based on the second uplink reference signal configuration associated with the uniform antenna ports and based on the configuration for the two patch feed connections.

Example 18. The apparatus according to example 17, wherein determining the configuration for the two patch feed connections on the dual polarized panel elements to be used for transmission on the uniform antenna ports comprises: measuring downlink reference signals for the two patch feed connections using at least a power metric; determining a delta between the power metric for the two patch feed connections; and determining the configuration for the two patch feed connections based on the determined delta.

Example 19. The apparatus according to example 18, wherein determining the configuration for the two patch feed connections based on the determined delta comprises: configuring the two patch feed connections for distributed transmission on both polarizations on the dual polarized panel elements based on the determined delta not meeting a threshold.

Example 20. The apparatus according to example 19, wherein the determined delta does not meet the threshold because the determined delta is less than the threshold.

Example 21. The apparatus according to one of example 19 or 20, wherein the two patch feed connections are configured for increased combined power amplified power and antenna gain relative to using only one of the patch feed connections.

Example 22. The apparatus according to example 18, wherein determining the configuration for the two patch feed connections based on the determined delta comprises: configuring the two patch feed connections for transmission on one patch feed connection of the two patch feed connections based on the determined delta meeting a threshold.

Example 23. The apparatus according to example 22, wherein the determined delta meets the threshold because the determined delta is higher than the threshold.

Example 24. The apparatus according to one of example 22 or 23, wherein the one patch feed connection is a patch feed connection of the two patch feed connections that has a best value of the power metric for the two patch feed connections.

Example 25. The apparatus according to any of examples 17 to 24, wherein the means are further configured for: receiving, by the user equipment from the access node, precoding information comprising a phase vector indicator indicative of at least one phase value associated with the uniform antenna ports; and transmitting, by the user equipment, one or more uplink data transmissions based on the received precoding information comprising the phase vector indicator.

Example 26. The apparatus according to example 25, wherein: the at least one phase value comprises a single relative phase value for the uniform antenna ports.

Example 27. The apparatus according to any of examples 25 or 26, wherein: the at least one phase value comprises a single relative phase value for the two patch feed connections for the antenna array used for the uniform antenna ports.

Example 28. The apparatus according to any of examples 25 to 27, wherein the one or more uplink data transmissions are performed using one or both of a physical uplink shared channel or a physical uplink control channel.

Example 29. The apparatus according to any of examples 17 to 28, wherein the means are further configured for providing, by the user equipment, information to the access node about capability of the user equipment to support the hybrid antenna port configuration using a capability report sent from the user equipment to the access node.

Example 30. The apparatus according to example 29, wherein the providing information to the access node about the capability of the user equipment to support the hybrid antenna port configuration also comprises indicating antenna array type of the user equipment.

Example 31. The apparatus according to example 30, wherein the antenna array type comprises one or both of linear or square.

Example 32. The apparatus according to any of examples 30 to 31, wherein the providing information to the access node about the capability of the user equipment to support the hybrid antenna port configuration also comprises indicating element spacing of the uniform antenna ports Example 33. An apparatus, comprising: one or more processors; and one or more memories storing instructions that, when executed by the one or more processors, cause the apparatus at least to perform: for a user equipment supporting a hybrid antenna port configuration comprising uniform antenna ports and non-uniform antenna ports, determining a configuration for two patch feed connections on dual polarized panel elements of an antenna array to be used for transmission on the uniform antenna ports; receiving, by the user equipment from an access node, information indicative of a first uplink reference signal configuration associated with the non-uniform antenna ports and a second uplink reference signal configuration associated with the uniform antenna ports; and transmitting, to the access node by the user equipment, at least one of a first set of uplink reference signals based on the first uplink reference signal configuration associated with the non-uniform antenna ports or a second set of uplink reference signals based on the second uplink reference signal configuration associated with the uniform antenna ports and based on the configuration for the two patch feed connections.

Example 34. The apparatus according to example 33, wherein determining the configuration for the two patch feed connections on the dual polarized panel elements to be used for transmission on the uniform antenna ports comprises: measuring downlink reference signals for the two patch feed connections using at least a power metric; determining a delta between the power metric for the two patch feed connections; and determining the configuration for the two patch feed connections based on the determined delta.

Example 35. The apparatus according to example 34, wherein determining the configuration for the two patch feed connections based on the determined delta comprises: configuring the two patch feed connections for distributed transmission on both polarizations on the dual polarized panel elements based on the determined delta not meeting a threshold.

Example 36. The apparatus according to example 35, wherein the determined delta does not meet the threshold because the determined delta is less than the threshold.

Example 37. The apparatus according to one of example 35 or 36, wherein the two patch feed connections are configured for increased combined power amplified power and antenna gain relative to using only one of the patch feed connections.

Example 38. The apparatus according to example 34, wherein determining the configuration for the two patch feed connections based on the determined delta comprises: configuring the two patch feed connections for transmission on one patch feed connection of the two patch feed connections based on the determined delta meeting a threshold.

Example 39. The apparatus according to example 38, wherein the determined delta meets the threshold because the determined delta is higher than the threshold.

Example 40. The apparatus according to one of example 38 or 39, wherein the one patch feed connection is a patch feed connection of the two patch feed connections that has a best value of the power metric for the two patch feed connections.

Example 41. The apparatus according to any of examples 33 to 40, wherein the one or more memories further store instructions that, when executed by the one or more processors, cause the apparatus at least to perform: receiving, by the user equipment from the access node, precoding information comprising a phase vector indicator indicative of at least one phase value associated with the uniform antenna ports; and transmitting, by the user equipment, one or more uplink data transmissions based on the received precoding information comprising the phase vector indicator.

Example 42. The apparatus according to example 41, wherein: the at least one phase value comprises a single relative phase value for the uniform antenna ports.

Example 43. The apparatus according to any of examples 41 or 42, wherein: the at least one phase value comprises a single relative phase value for the two patch feed connections for the antenna array used for the uniform antenna ports.

Example 44. The apparatus according to any of examples 41 to 43, wherein the one or more uplink data transmissions are performed using one or both of a physical uplink shared channel or a physical uplink control channel.

Example 45. The apparatus according to any of examples 33 to 44, wherein the one or more memories further store instructions that, when executed by the one or more processors, cause the apparatus at least to perform providing, by the user equipment, information to the access node about capability of the user equipment to support the hybrid antenna port configuration using a capability report sent from the user equipment to the access node.

Example 46. The apparatus according to example 45, wherein the providing information to the access node about the capability of the user equipment to support the hybrid antenna port configuration also comprises indicating antenna array type of the user equipment.

Example 47. The apparatus according to example 46, wherein the antenna array type comprises one or both of linear or square.

Example 48. The apparatus according to any of examples 46 to 47, wherein the providing information to the access node about the capability of the user equipment to support the hybrid antenna port configuration also comprises indicating element spacing of the uniform antenna ports Example 49. A computer program, comprising instructions which, when the program is executed by an apparatus, cause the apparatus to carry out the methods of any of examples 1 to 16.

Example 50. The computer program according to example 49, wherein the computer program is a computer program product comprising a computer-readable medium bearing the instructions embodied therein for use with the apparatus.

Example 51. The computer program according to example 49, wherein the computer program is directly loadable into an internal memory of the apparatus.

As used in this application, the term "circuitry" may refer to one or more or all of the following:
(a) hardware-only circuit implementations (such as implementations in analog, digital, and/or quantum circuitry) and
(b) combinations of hardware circuits and software such as (as applicable): (i) a combination of analog, digital, and/or quantum hardware circuit(s) with software/firmware and (ii) any or all portions of hardware processor(s) (including digital and/or quantum processor(s)) with software, and memory(ies) that work together to cause an apparatus, such as a mobile device, computing device, or server, to perform various functions) and
(c) any or all portions of hardware circuit(s), such as microprocessor(s), processor(s) and/or quantum processors, that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

In an example embodiment, software (e.g., application logic, an instruction set) as used herein is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of a computer described and depicted, e.g., in FIG. 7. A computer-readable medium may comprise a computer-readable storage medium (e.g., memories 15, 75, and 95 or other device) that may be any media or means that can contain, store, and/or transport the instructions for use by or in connection with an instruction execution system, apparatus, or device, such as a computer. A computer-readable storage medium does not comprise propagating signals, and therefore may be considered to be non-transitory. The term "non-transitory", as used herein, is a limitation of the medium itself (i.e., tangible, not a signal) as opposed to a limitation on data storage persistency (e.g., RAM, random access memory, versus ROM, read-only memory).

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications which may be made without departing from the scope of the present invention as defined in the appended claims.

The following abbreviations that may be found in the specification and/or the drawing figures are defined as follows:

| | |
|---|---|
| 2G | second generation |
| 5G | fifth generation |
| 6G | sixth generation |
| AMF | access and mobility management function |
| AP | Antenna Port |
| CB | Codebook-Based |
| CSI-RS | Channel State Information Reference Signal |
| DCI | Downlink Control Information |
| DL | downlink (from network to UE) |
| EIRP | Equivalent Isotropic Radiated Power |
| E-SMLC | evolved serving mobile location center |
| eNB (or eNodeB) | evolved Node B (e.g., an LTE base station) |
| GMLC | Gateway Mobile Location Center |
| gNB (or gNodeB) | base station for 5G/NR |
| FR1 | Frequency Range 1 |
| FR2 | Frequency Range 2 |
| H-AP | Hybrid Antenna Ports |
| H-TPMI | Hybrid Transmit Precoding Matrix Indicator |
| IE | information element |
| I/F | interface |
| LMF | Location Management Function |
| LTE | long term evolution |
| MCAD | Mechanical computer-aided design |
| MIMO or MiMo | multiple input, multiple output |
| MME | mobility management entity |
| mmW | millimeter wave |
| NCB | Non-Codebook-Based |
| NF | network function |
| ng or NG | next generation |
| NR | new radio |
| NRF | Network Repository Function |
| N/W or NW | network |
| PA | power amplifier |
| PFC | patch feed connection |
| PMI | Precoding Matrix Indicator |
| PVI | Phase Vector Indicator |
| PUCCH | physical uplink control channel |
| PUSCH | physical uplink shared channel |
| RACH | Random Access Channel |
| RAN | radio access network |
| RS | reference signal |
| RF | Radio Frequency |
| RRC | Radio Resource Control |
| RSRP | Reference Signal Received Power |
| Rx | receiver |
| SGW | serving gateway |
| SINR | signal-to-interference-plus-noise ratio |
| SMF | session management function |
| SRS | Sounding Reference Signal |
| SSB | Synchronization Signal Block |
| TPMI | Transmit Precoding Matrix Indicator |
| TRP | transmission-reception point |
| Tx | transmitter |
| UDM | unified data management |
| UDR | unified data repository |
| UE | user equipment (e.g., a wireless, typically mobile device) |
| UL | uplink (from UE to network) |
| ULA | Uniform Linear Array |
| UPF | user plane function |

## Claims

1. A method, comprising:
for a user equipment (10) supporting a hybrid antenna port configuration comprising uniform antenna ports and non-uniform antenna ports, determining a configuration for two patch feed connections (650-1, 650-2) on dual polarized panel elements (660) of an antenna array to be used for transmission on the uniform antenna ports;
receiving, by the user equipment (10) from an access node (70), information indicative of a first uplink reference signal configuration associated with the non-uniform antenna ports and a second uplink reference signal configuration associated with the uniform antenna ports; and
transmitting, to the access node (70) by the user equipment (10), at least one of a first set of uplink reference signals based on the first uplink reference signal configuration associated with the non-uniform antenna ports or a second set of uplink reference signals based on the second uplink reference signal configuration associated with the uniform antenna ports and based on the configuration for the two patch feed connections (650-1, 650-2).

2. An apparatus, comprising means for:
for a user equipment (10) supporting a hybrid antenna port configuration comprising uniform antenna ports and non-uniform antenna ports, determining a configuration for two patch feed connections (650-1, 650-2) on dual polarized panel elements (660) of an antenna array to be used for transmission on the uniform antenna ports;
receiving, by the user equipment (10) from an access node (70), information indicative of a first uplink reference signal configuration associated with the non-uniform antenna ports and a second uplink reference signal configuration associated with the uniform antenna ports; and
transmitting, to the access node (70) by the user equipment (10), at least one of a first set of uplink reference signals based on the first uplink reference signal configuration associated with the non-uniform antenna ports or a second set of uplink reference signals based on the second uplink reference signal configuration associated with the uniform antenna ports and based on the configuration for the two patch feed connections (650-1, 650-2).

3. The apparatus according to claim 2, wherein determining the configuration for the two patch feed connections (650-1, 650-2) on the dual polarized panel elements (660) to be used for transmission on the uniform antenna ports comprises:
measuring downlink reference signals for the two patch feed connections (650-1, 650-2) using at least a power metric;
determining a delta between the power metric for the two patch feed connections (650-1, 650-2); and
determining the configuration for the two patch feed connections (650-1, 650-2) based on the determined delta.

4. The apparatus according to claim 3, wherein determining the configuration for the two patch feed connections (650-1, 650-2) based on the determined delta comprises:
configuring the two patch feed connections (650-1, 650-2) for distributed transmission on both polarizations on the dual polarized panel elements (660) based on the determined delta not meeting a threshold.

5. The apparatus according to claim 4, wherein the determined delta does not meet the threshold when the determined delta is less than the threshold.

6. The apparatus according to one of claim 4 or 5, wherein the two patch feed connections (650-1, 650-2) are configured for increased combined power amplified power and antenna gain relative to using only one of the patch feed connections (650-1, 650-2).

7. The apparatus according to claim 3, wherein determining the configuration for the two patch feed connections (650-1, 650-2) based on the determined delta comprises:
configuring the two patch feed connections (650-1, 650-2) for transmission on one patch feed connection of the two patch feed connections (650-1, 650-2) based on the determined delta meeting a threshold.

8. The apparatus according to claim 7, wherein the determined delta meets the threshold when the determined delta is higher than the threshold.

9. The apparatus according to one of claim 7 or 8, wherein the one patch feed connection is a patch feed connection of the two patch feed connections (650-1, 650-2) that has a best value of the power metric for the two patch feed connections (650-1, 650-2).

10. The apparatus according to any of claims 2 to 9, wherein the means are further configured for:
receiving, by the user equipment (10) from the access node (70), precoding information comprising a phase vector indicator indicative of at least one phase value (685, 695) associated with the uniform antenna ports; and
transmitting, by the user equipment (10) and to the access node (70), one or more uplink data transmissions based on the received precoding information comprising the phase vector indicator.

11. The apparatus according to claim 10, wherein:
the at least one phase value comprises a single relative phase value (685) for the uniform antenna ports.

12. The apparatus according to any of claims 10 or 11, wherein:
the at least one phase value comprises a single relative phase value (695) for the two patch feed connections for the antenna array used for the uniform antenna ports.

13. The apparatus according to any of claims 10 to 12, wherein the one or more uplink data transmissions are performed using one or both of a physical uplink shared channel or a physical uplink control channel.

14. The apparatus according to any of claims 2 to 13, wherein the means are further configured for providing, by the user equipment (10), information to the access node (70) about capability of the user equipment to support the hybrid antenna port configuration using a capability report sent from the user equipment to the access node.

15. The apparatus according to claim 14, wherein the providing information to the access node about the capability of the user equipment (10) to support the hybrid antenna port configuration also comprises indicating antenna array type of the user equipment (10).
